# EUROPEAN PATENT APPLICATION

(11) **EP 3 184 969 A1**
(43) Date of publication of application: **28.06.2017**
(21) Application number: 15201581.4
(22) Date of filing: 21.12.2015
(51) Int. Cl.: G01F 1/58

(54) **ELECTROMAGNETIC FLOW METER WITH MULTIPLE ELECTRODES**

(71) Applicant: PROCES-DATA A/S, 8600 Silkeborg (DK)
(72) Inventor: NIELSEN, Ole Cramer, 8600 Silkeborg (DK)
(74) Representative: Gregersen, Niels Henrik

(57) **Abstract**

This invention relates to electromagnetic flowmeters for volumetric flow measurements of electrically conductive fluids flowing in an existing pipework. Multiple magnetic means are arranged to provide a magnetic field in a cross section of the metering pipe in multiple magnetic directions and multiple electrodes are arranged with means to measure a voltage across any pair amongst the multiple electrodes, having multiple electrode pair directions. The electromagnetic flowmeter is configured for performing a volumetric flow measurement using at least two different combinations of magnetic directions and electrode pair directions. In a preferred embodiment the electromagnetic flowmeter comprises two pairs of electromagnetic coils, where the two magnetic directions are perpendicular to each other, and four electrodes defining multiple electrode pairs. The flowmeter may also comprise a switch arrangement for switching between multiple combinations of magnetic directions and electrode pair directions and a logic controller to control the switch arrangement. A method for using the electromagnetic flowmeter to detect an asymmetric flow profile or system faults is also disclosed.

## Description

### Field of the Invention

This invention relates to electromagnetic flowmeters for volumetric flow measurements on electrically conductive fluids and to be inserted into existing pipework between the upstream and downstream pipes of a fluid line.

### Background of the Invention

The operating principle of this type of flowmeters is based on that moving a conductor through a magnetic field generates a voltage across the conductor. A simple electromagnetic flowmeter typically comprises a round metering pipe guiding a fluid, two magnetic coils for applying a magnetic field and two electrodes across which the induced voltage is measured. The electrodes are typically small round electrodes also referred to as point-type electrodes. All parts are arranged in a manner which ensures that the flow direction, the direction of the magnetic field and the path between the electrodes are all perpendicular to each other. When a current is applied to the coils a magnetic field is produced at right angles to the metering pipe. A conductive fluid flowing through the metering pipe , an electrical voltage is induced and measured by two electrodes mounted in the metering pipe. The measured voltage is proportional to the average velocity of flow and therefore to the volume flowing through the metering pipe.

Performing volumetric flow measurements using round electromagnetic flowmeters mounted with two point-type electrodes may be influenced by the viscosity and type of fluid, and flow profile of the fluid. Therefore it is often necessary to use a second measurement of or a calibration determined by characteristics of the fluid to be measured. This means added costs for purchase, installation and maintain extra equipment or recalibrating the meter when changing fluids for instance when changing between fluids with different viscosities, between fluids comprising different content, size or percentage of solid particles, between a homogeneous fluid to non-homogeneous fluid.

The progress within electromagnetic flowmeters for volumetric flow measurement to meet these challenges has been to expand the area of the electrodes to measure across a large volume of the fluid passing through the applied magnetic field thereby achieving an average velocity of the flow over a lager section of the metering pipe. US 4,098,118 disclose a compact electromagnetic flowmeter readily installable in existing flow lines. For more precise measurements the disclosed flowmeter comprises enlarged electrode plates along the periphery and in the flow direction of the metering pipes inner surface. Precautions when installing an electromagnetic flowmeters for volumetric flow measurement has included consideration of where in an existing system the flow meter can by mounted to obtain a minimum of turbulence in the fluid by mounting the flowmeter away from bends or other equipment that can cause turbulence in the fluid due to obstacles or velocity differences across the flow cross section due to bending, narrowing or widening the pipework. Also the velocity of the flow has influence on the flow profile which changes from a laminar flow to a turbulent flow when exceeding a critical velocity which is influenced by the diameter of the pipe, the viscosity and density of the fluid.

When a fluid flows through a pipe, its velocity tends to vary from zero along the pipe wall up to its maximum through the centre of the pipe. The velocity profile depends on the actual flow velocity together with the viscosity of the fluid.

When the flow rate is low, the velocity profile takes the shape of a parabola. This is called laminar flow. If the flow rate is gradually increased, the flow profile also changes gradually, still maintaining the laminar flow profile, until it reaches the critical velocity. At this flow rate, the flow profile will, via a transition phase, change from laminar to turbulent flow with the formation of eddies and chaotic motion, which do not contribute to the volume flow rate. Precisely when the fluid reaches the critical velocity and changes to turbulent flow, depends on the diameter of the pipe, and on the viscosity and density of the fluid. For cream, for example, the viscosity strongly depends on the temperature and the percentage of fat, and it is therefore not possible to predict the flow profile at any given flow rates.

The flow profile can be symmetric or asymmetric across the pipe cross section. Depending on the measuring principle the accuracy of the measurements are influenced by the flow profile. Laminar flow may be symmetric across the pipe cross section in the horizontal direction but asymmetric in the vertical direction for example if the liquid flows at low velocity and a volume below the capacity of the pipe works. Furthermore laminar flow may also be asymmetric in the horizontal direction due to for example a bending of the pipe work resulting in different velocities at either side of the pipe resulting in a screwed/lopsided parabolic profile in the horizontal direction across the pipe cross section. A bend may be any angle, but commonly the bend is 90 degrees. A turbulent flow may also encompass a symmetric flow profile, an asymmetric flow profile or a combination of both depending on the part of the pipe cross section and the direction considered.

The technique used to avoid an unknown flow profile from affecting the accuracy of a measurement, consists essentially of measuring the average velocity of the fluid throughout the full cross section of the pipe, hence registering all the fluid passing through it.

One problem is the low precision of average measurements.

The flowmeters are typically used under rugged conditions including a broad temperature range, fast temperature changes, sudden pressure changes and aggressive chemical conditions and tear and wear of particles in the fluids. The material, size and mounting of embedded electrodes are therefore essential for the lifetime and operation of the flowmeter. The electrode material differs from that of the metering pipe giving differences in material characteristics including thermal expansion, resilience, strength, thermal stability, chemical resistance, corrosiveness with consequently problems of leaking fluid, biofilm build-up, non-flush surfaces, heat-, pressure- and long-term-use induced recesses on the inner surface between the electrodes and metering pipe. These consequently problems may by enhanced with larger electrodes due to the resulting changes in actual length of gap, bending or impingement between the different materials parts in the construction. These features are in force for both electrodes in direct contact with the fluid to be measured or electrodes displaced inwardly from the wall of the metering pipe and thus insulated from the fluid by the dielectric material of the metering pipe. This is due to the thin layer of insulating material.

### Object of the Invention

It is an objective to overcome one or more of the before mentioned shortcomings of the prior art.

### Description of the Invention

The aforementioned aspects may be achieved by an electromagnetic flow meter with multiple electrodes and applied magnetic field using at least two different combinations of magnetic directions and electrode pair directions for performing a volumetric flow measurement and where at least one of the magnetic direction or electrode pair directions are different. The flow meter is configured for volumetric flow measurements of electrically conductive fluids flowing in an existing pipework. Thus, the flow meter may be configured to be inserted into the existing pipework and for guiding a fluid in a flow direction from an inlet to an outlet in a metering pipe with a pipe cross-section and a pipe length in the flow direction. The metering pipe comprises an inner surface that is substantially flush in the flow direction. Furthermore, the flowmeter comprises magnetic means arranged to provide a magnetic field in a cross section of the metering pipe in multiple magnetic directions and comprises multiple electrodes configured to constitute part of the metering piper and to be arranged within the magnetic field when provided. The electrodes may be arranged with means to measure a voltage across a pair amongst the multiple electrodes having multiple electrode pair directions.

Thereby a higher precision of volumetric flow measurements by measuring different places across the pipe cross section rather than over a larger continuous volume part of the fluid is achieved. This may be achieved by use of point-type electrodes - in constellation of two electrodes forming an electrode pair - and a magnetic field, which directions can be shifted between measurements. Both the magnetic field direction and electrode pair direction (for three or more electrodes) can be shifted. Contrary to earlier progress in flowmeter construction where a higher precision of volumetric flow measurements is achieved by using larger and larger electrodes but still using a fixed direction of the applied magnetic field.

The electrodes may be capacitance-type electrodes or arrangements. This allows for the electrodes to be embedded or encapsulated in a layer facing flow. Such electrodes may have an extent and a person skilled in the art would be able to determine, define or deduce a pre-dominant direction between a pair of electrodes. A simple example would be geometric centre or an appropriate average centre.

In a broader sense the electrode pair direction may be a vector-field. The vector field may have an average vector that represents the electrode pair direction. In this sense a line of sight may be understood as a sight along an average vector or, some appropriate averaging, along a vector field.

Achieving a higher precision of the average flow measurement may be accomplished by measuring the flow across a larger section of the pipe cross section.

An effect of this embodiment is to provide an electromagnetic flow meter for accurate measurement of volumetric flow on liquids independent on the flow profile using multiple point-type electrodes. The advantage is that the volumetric flow measurement are performed using the flow meter as the only apparatus but measuring across the cross section of the metering pipe several places. Using point-type electrodes the measurement is done only on the fluid passing through the line-of-sight volume between the electrodes. Typically the calibration is therefore conditional on a particular known flow profile. However using combinations of electrode pairs, electrode pair directions and magnetic directions to obtain more than one line-of-sight in the cross section of the metering pipe and thus the fluid flow, a turbulent profile will be averaged in the measurements.

The electrode pair direction or the line-of-sight is the line between two electrodes across which a voltage is measured. Thus electrode pair direction is different even though they are only shifted in a parallel direction. The electrode pair direction is not different when the direction is interchanged from pointing from a first electrode to a second electrode to pointing from a second electrode to a first electrode.

The line-of-sight between two electrodes may also be an average of a volume between a pair of electrodes. The volume may be outline by the area of the electrodes comprising the electrode pair and the curves adjacent to the line-of-sight connection the electrodes which curves encompass the fluid contributing to the induced voltages measured across the electrode pair.

To achieve a higher precision of the average measurement the flow is to be measured across a lager section of the pipe cross section and the teaching within electromagnetic flowmeters for volumetric flow measurement to meet this challenge has been to expand the area of the electrodes to measure across a large volume of the fluid passing through the applied magnetic field thereby achieving an average velocity of the flow over a lager section of the metering pipe. Thus in this teaching the field-of-sight is kept in a fixed position.

Contrary to the previous teaching of fixed electrode direction and magnetic field direction the above described embodiments provides means for performing a volumetric flow measurement using at least two different combinations of magnetic directions and electrode pair directions, where at least one of the magnetic direction or electrode pair directions are different. Thus in this embodiment either the electrode pair direction or the magnetic field is changed between measurements and multiple measurements are performed or multiple measurements are performed simultaneously but performed on different electrode pair directions.

A higher precision of the measurements performed may be achieved by interpolating consecutive measurements or using tabulated values for estimation or calibration of the measured values. This is common practice and knowledge for a person skilled in the art and may be achieved by use of one or more groups of:
- look-up table values;
- a database function;
- a curve or a graph;
- a mathematical function or algorithm
and thereby establishing the measured volumetric flow rate by calibrating and/or converting values of at least one event or a combination of events.

A further advantage of applying point-type electrodes contrary to large area electrodes are that flow meters are typically used under rugged conditions including a broad temperature range, fast temperature changes, sudden pressure changes and aggressive chemical conditions and tear and wear of the inner surface due to particles in the fluids. The material, size and mounting of embedded electrodes are therefore essential for the lifetime and operation of the flowmeter. The electrode material differs from that of the metering pipe giving differences in material characteristics including thermal expansion, resilience, strength, thermal stability, chemical resistance, corrosiveness with consequently problems of leaking fluid, biofilm build-up, non-flush surfaces, heat-, pressure- and long-term-use induced recesses on the inner surface between the electrodes and metering pipe. These consequently problems may by enhanced with larger electrodes due to the resulting changes in actual length of gap, bending or impingement between the different materials parts in the construction. These features are in force for both electrodes in direct contact with the fluid to be measured or electrodes displaced inwardly from the wall of the metering pipe and thus insulated from the fluid by the dielectric material of the metering pipe. This is due to the thin layer of insulating material.

The electrodes may be arranged with means to measure a voltage across a pair amongst the multiple electrodes having multiple electrode pair directions.

The means for measuring the induced voltage across the electrodes may be directly coupled by electrical wiring to the electrodes, capacitive coupled or coupled by other methods applicable for direct or derived measurements of the induced voltage.

In one embodiment the flow meter comprises a first magnetic means with a first magnetic direction and a second magnetic means with a second magnetic direction and arranged with the first and second magnetic directions substantially perpendicular to each other. The effect is that the magnetic field direction for permanent magnets can be shifted by a shift in the physical position of the magnetic means. The shift can be a circular rotation along the outer periphery of the metering pipe in an arbitrary distance. This provides the advantage of using permanent magnets but being able to shift the magnetic field direction to measure the liquid flow in different electrode pair directions.

A further embodiment of the electromagnetic flow meter includes a first, a second, a third and a fourth electrode equally distributed along the periphery of the cross section of the metering pipe and configured to form at least two distinctive pairs of electrodes with a first electrode pair direction and a second electrode pair direction that are different. The effect is that six different electrode pair directions can be provided. This gives the advantage of measuring the liquid flow six different places across the pipe cross section given that the magnetic field is shifted accordingly.

Another embodiment of the flow meter comprises a first and second magnetic means which are electromagnetic coils each configured to generate magnetic field independent of each other. The effect is that the magnetic field direction can be shifted only by varying the strength of the two magnetic fields without a shift in physical position. This provides the advantage of having fixed position of the magnetic means but being able to shift the magnetic field direction to measure the liquid flow in different electrode pair directions.

One embodiment of the flow meter comprises a switch arrangement and a logic controller. The switch arrangement allows for switching between multiple combinations of magnetic directions and electrode pair directions. The logic controller is configured to control the switch arrangement. The effect is that multiple measurements can be performed in a fast and in a controlled way and that the measurements can be repeated. The advantage is that continuous measurements across the pipe can be conducted using the same sequence of combinations between electrode pair direction and magnetic field direction to detect small variations in the volumetric flow. Additional advantage is that control measurements easily can be performed. This could be applicable for fault detection.

An object of the invention may be achieved by a method of performing a volumetric flow measurement of electrically conductive fluids flowing in a pipe through a pipe cross section in a flow direction. Such method may comprise acts of providing at least one magnetic field in a cross section of the pipe in a magnetic direction and of measuring at least one voltage across a pair of electrodes having am electrode pair direction to obtain at least three different directions of magnetic direction and electrode pair direction. Also comprised in the method may be the act of estimating the volumetric flow of electrically conductive fluids as a function of at least two different combinations of magnetic directions and electrode pair directions.

The operating principle is based on that an electrical current in a conductor exposed to a magnetic field will induce a voltage across the conductor.

The effect of this method is to perform volumetric flow measurement with components mounted on existing pipework. One advantage is that a complete flow meter can be inserted in the existing pipework between upstream and downstream pipe. Another advantage is that the metering pipe can be comprised of the existing pipework and then the means required by the method can be external means to be mounted or installed to the existing pipework. The means can either be installed inside the pipework or outside the pipework with precaution that the inner surface of the pipework used as the metering pipe is substantially flush in the flow direction.

Precautions when installing electromagnetic flowmeters for volumetric flow measurement includes consideration of obtain a minimum of turbulence in the fluid. One source that can cause turbulence to occur is recesses due to mounting extra apparatus in existing pipework. This may be avoided by using the existing pipework as metering pipe. This is also valid for avoiding narrowing or widening the pipework to insert a flow meter with standard diameters of the metering pipe. This could be relevant for plants build using pipework with a non-standard pipe diameter.

A further effect is that parts of the means for performing volumetric flow measurements can be mounted floating compared to the pipework. By floating is meant that the part not physical connected. This in advantageous in relation to the rugged conditions under which flow meters are typically used. Conditions including broad temperature range, fast temperature changes, sudden pressure changes and heavy vibrations in the pipe work due to valves opening and closing the flow or other apparatuses or machines connected to the pipe works.

The flow meter may be arranged with means to collect multiple electrode pair measurements and with means to estimate a potential between two electrodes and then estimate the location of a virtual electrode and then define a virtual electrode pair and a direction between a virtual electrode pair.

The recited features may allow for less stringent requirements of the pipe cross-section than hereto. The pipe cross-section may be circular. The cross-section may also be chosen as a square. Variants such as elliptic shapes or rectangular cross-sections may also be used. Polygons that are equiangular may also be used. Likewise cross-sections from a triangle, quadrilateral, pentagon, hexagon, etc. may be used. The electrodes may be placed in the centre of a line segment or at an intersection between two line segments.

An object of the invention may be achieved by a method of performing a volumetric flow measurement comprise an act of providing at least one magnetic field. This act comprises acts of using a first magnetic means with a first magnetic direction and a second magnetic means with a second magnetic direction with the means arranged with a first and a second magnetic direction substantially perpendicular to each other.

This method results in a particular effective coverage, by using a minimum of magnetic fields that can be combined or added to yield different magnetic directions.

An object of the invention may be achieved by a method of performing a volumetric flow measurement comprise an act of measuring at least one voltage across a pair of electrodes. This act comprises acts of using a first, a second, a third and a fourth electrode which are equally distributed about the cross section of the pipe and configured to form at least two distinctive pairs of electrodes with a first electrode pair direction and a second electrode pair direction that are different.

This method results in a particular effective coverage, by using a minimum of electrodes that can be combined or added to yield different electrode pair directions.

An object of the invention may be achieved by a method of performing a volumetric flow measurement comprise an act of detecting an asymmetric flow profile in the pipe section. This method comprises an act of comparing at least two different combinations of magnetic directions and electrode pair directions to detect variations in flow profiles across the pipe section.

An object of the invention may be achieved by a method of performing a volumetric flow measurement and detecting system faults comprising further acts of comparing all different combinations of magnetic directions and electrode pair directions to detect variations in flow profiles across the pipe section and to detect faults as large or singular deviations in one or more voltages across a pair of electrodes with an electrode pair direction.

An object of the invention may be achieved by a method of performing a volumetric flow measurement wherein the action of measuring at least one voltage across a pair of electrodes and which method further comprise actions of using at least two distinctive pairs (82) of electrodes with a first electrode pair direction (242) and a second electrode pair direction (244) that are different to obtain at least one virtual electrode pair. The virtual electrode pair and resulting measurements cross the virtual electrode pair is derived from averaging measurements from two adjacent electrode pairs in combination with the applied magnetic field.

The effect of this method is to perform additional averaged measurements across the metering pipe cross section 56 which is not provided for as direct measurements by the mounted electrodes. A advantage is that measurements of line-of-sight volume is increased for a better volumetric flow measurement.

The scope of the electromagnetic flow meter generally relate to metering of conductive fluids. The scope is not limited to any particularly mentioned example herein. Such example is only for illustrative purpose and persons skilled in the art of flow metering will readily be able to adjust the teachings disclosed herein to a particular type of flow. Such particular flow may be food or dairy fluids such as milk or cream, oil or petrochemical fluids such as diesel, gasoline or similar petrochemicals, raw fluids such as raw oil or fracturing water or well or drilling fluids.

### Description of the Drawing

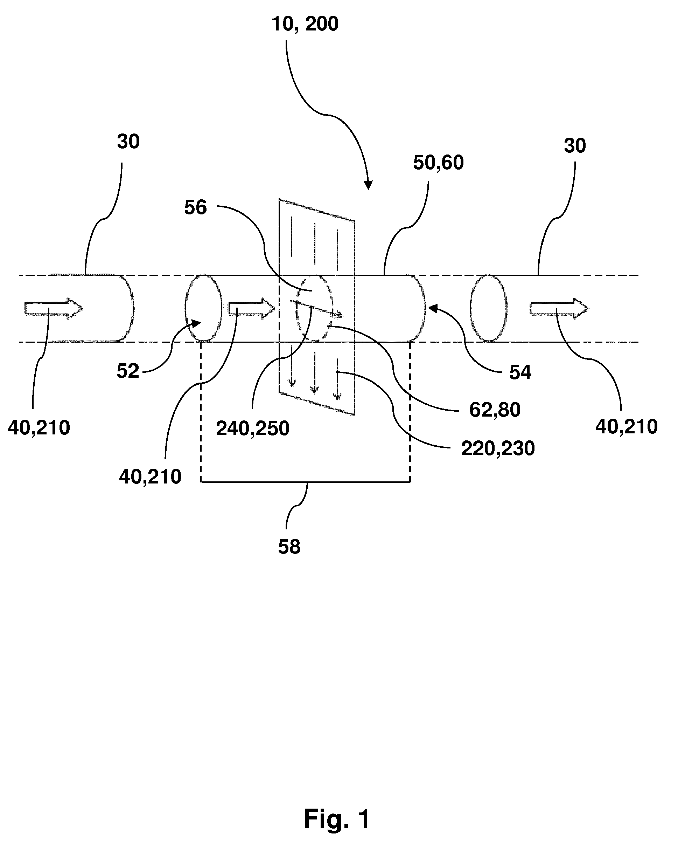

Figure 1 illustrates metering pipe inserted into existing pipework between a first end of the existing pipework and a second end of the existing pipework. A fluid is guided in the pipework in a flow direction from the existing pipework through the metering pipe and further on into the second part of the existing pipework. A plane for the magnetic field in a cross section of the metering piper is illustrated with a magnetic direction. A pair of electrodes as part of the inner surface of the metering pipe is illustrated with an electrode pair direction.

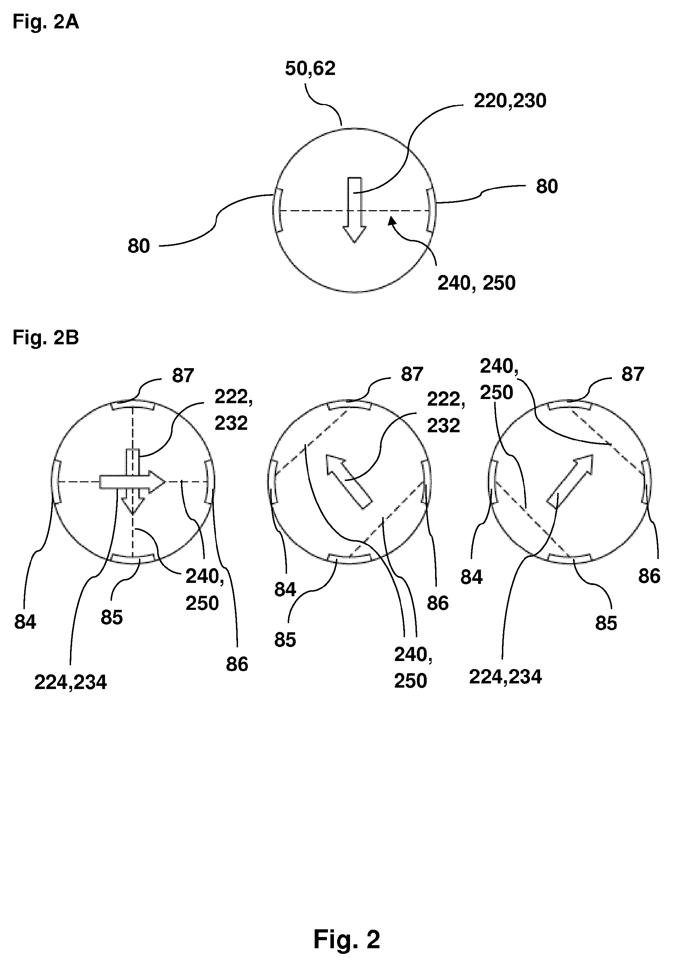

Figure 2A illustrates prior art construction of magnetic-inductive flowmeters. A magnetic field is applied across the metering pipe and the metering pipe is constructed with two electrodes across which an induced voltage due to the magnetic field and the flow of fluid is measured.

Figure 2B illustrates embodiments of the present flowmeter. The metering pipe is constructed with four electrodes evenly distributed at the periphery of the cross section of the metering pipe. Magnetic fields illustrated by arrows are applied across the metring pipe and concurrently induced voltage across electrode pair perpendicular to the magnetic direction is measured.

It is noted that the figure only illustrates the directions of electrode pairs. The electrodes may be placed on the inside, say galvanic-type electrodes, or on the outside, say capacitive-type electrodes.

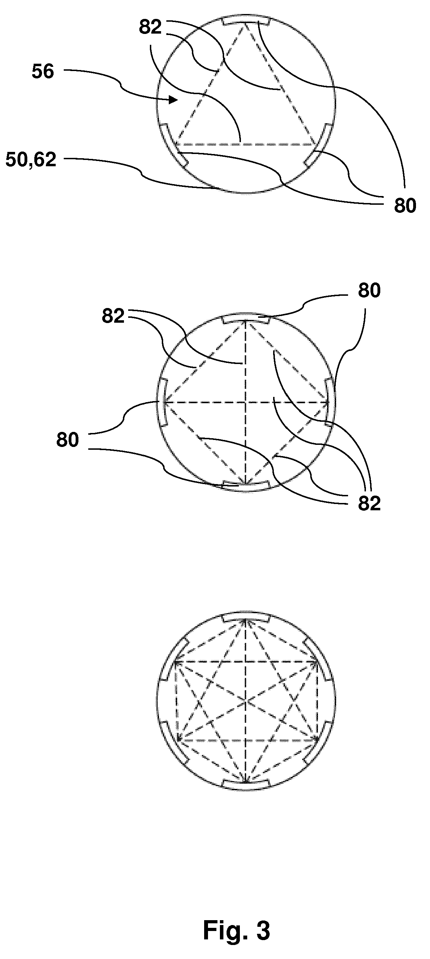

Figure 3 illustrates embodiments of the present flowmeter constructed with three, four and six electrodes equally distributed along the periphery of the cross section of the metering pipe and the combination of electrode pairs are illustrated by dotted lines.

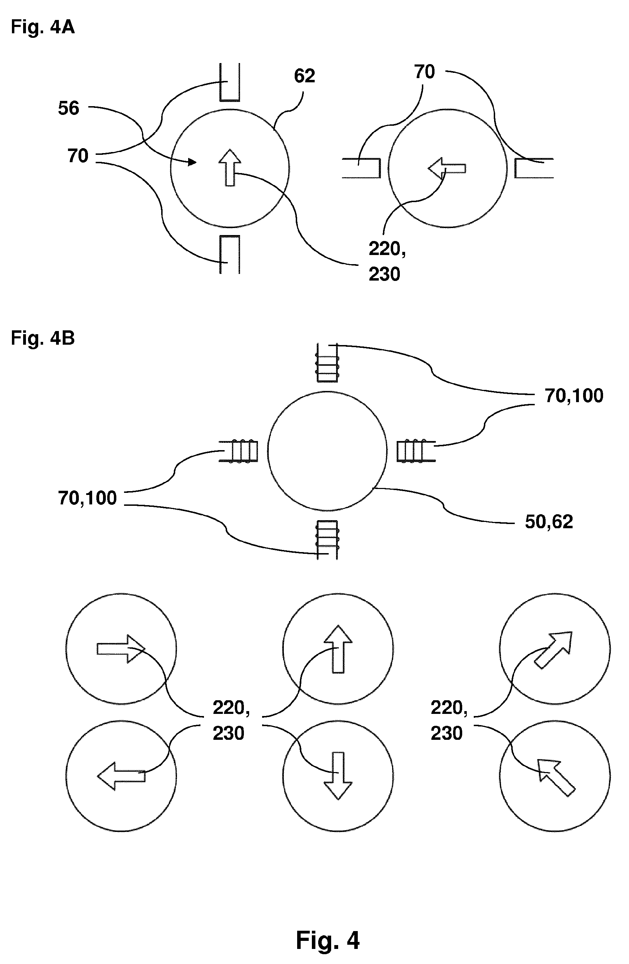

Figure 4 illustrates embodiments configured with magnetic means comprised of permanent magnets in 4A and with magnetic means comprised of electromagnetic coils in 4B. The permanent magnets apply a magnetic field across the metering pipe, illustrated by arrows. Shifting the magnets 90 degrees along the cross section of the metering pipe shifts accordingly the magnetic direction 90 degrees.

Using electromagnetic coils distributed along the outer periphery and in the plane of the cross section of the metering pipe the magnetic direction of the applied magnetic field is changed dependent on the applied current to each of the electromagnetic coils.

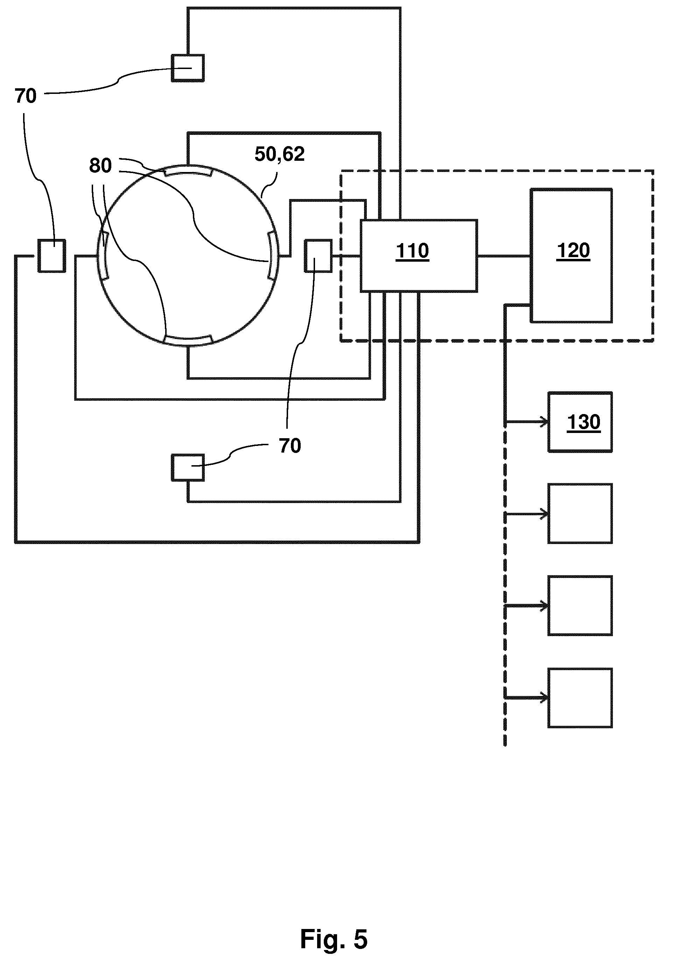

Figure 5 illustrates a switch arrangement that allows for switching between multiple combinations of magnetic directions and electrode pair directions and a logic controller configured to control the switch arrangement. The electrodes and electromagnetic coils are connected to the switch arrangement. The logic controller is connected to data storage means.

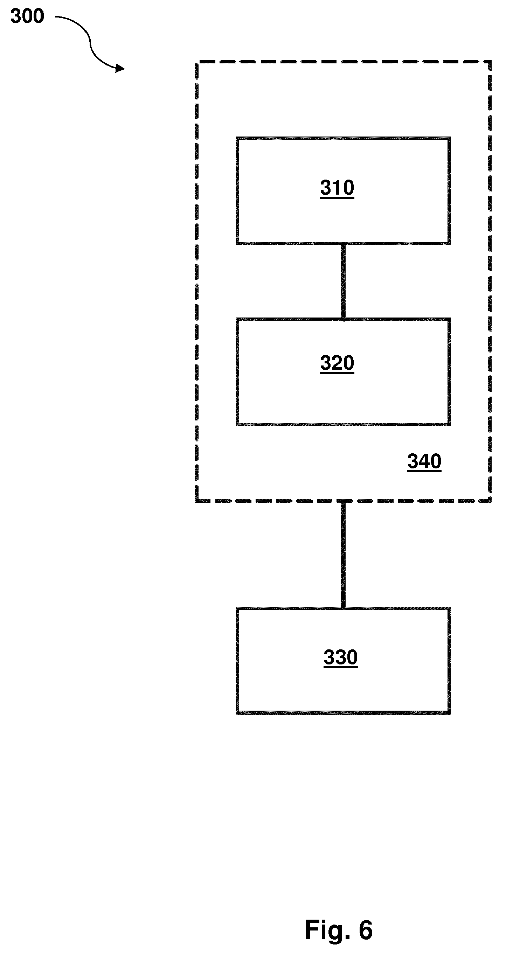

Figure 6 illustrates a method of performing a volumetric flow measurement of electrically conductive fluids comprising acts of providing magnetic field, measuring voltage and to estimate the volumetric flow.

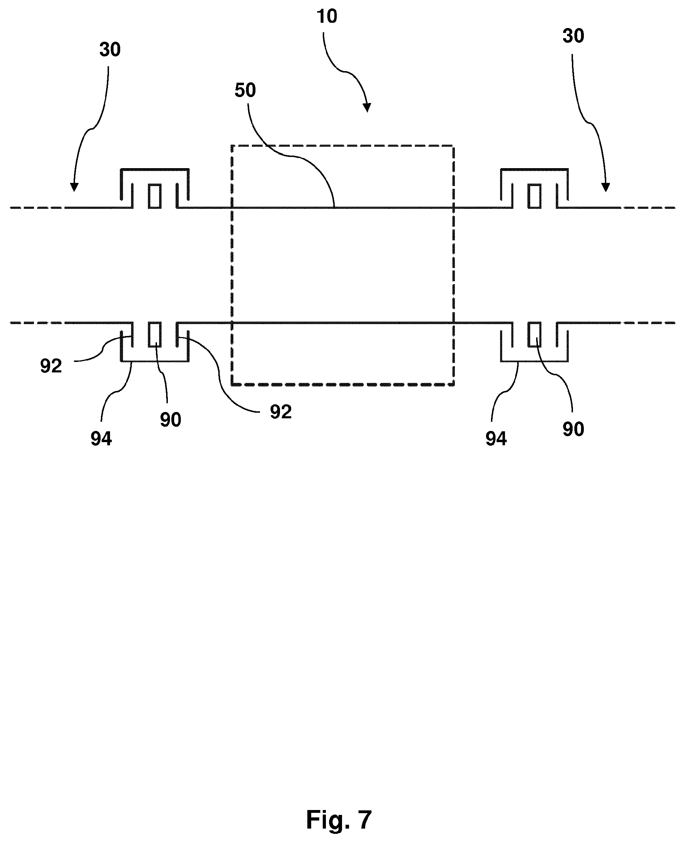

Figure 7 illustrates a flowmeter inserted into existing pipework between a first end of the existing pipework and a second end of the existing pipework with ferrules, clamps and gaskets.

**Detailed Description of the Invention**

| **Number** | **Term** |
|---|---|
| 10 | Electromagnetic flow meter |
| 20 | Electrically conductive fluid |
| 30 | Existing pipework |
| 40 | Fluid |
| 42 | Flow profile |
| 44 | Asymmetric flow profile |
| 50 | Metering pipe |
| 52 | Metering pipe inlet |
| 54 | Metering pipe outlet |
| 56 | Pipe cross section |
| 58 | Pipe length |
| 60 | Inner surface |
| 62 | Pipe cross section periphery |
| 70 | Magnetic means |
| 72 | First magnetic means |
| 74 | Second magnetic means |
| 80 | Electrode |
| 82 | Electrode pair |
| 84 | First electrode |
| 85 | Second electrode |
| 86 | Third electrode |
| 87 | Fourth electrode |
| 90 | Gasket |
| 92 | Ferrule |
| 94 | Clamp |
| 100 | Electromagnetic coils |
| 110 | Switch arrangement |
| 120 | Logic controller |
| 130 | Storage means |
| 200 | Volumetric flow measurement |
| 210 | Flow direction |
| 220 | Magnetic field |
| 222 | First magnetic field |
| 224 | Second magnetic field |
| 230 | Magnetic direction |
| 232 | First magnetic direction |
| 234 | Second magnetic direction |
| 240 | Electrode pair direction |
| 242 | First electrode pair direction |
| 244 | Second electrode pair direction |
| 250 | Induced voltage |
| 300 | Method |
| 310 | Providing |
| 320 | Measuring |
| 330 | Estimating |
| 340 | Comparing |
| 350 | Detect faults |
| 360 | Virtual electrode pair |

Figure 1 illustrates the measuring principle and an embodiment of the electromagnetic flow meter 10 inserted into existing pipework 30. The metering pipe 50 is inserted with the metering inlet 52 and the metering outlet 54 in continuation of the existing pipework 30. A fluid 40 is guided in the existing pipework 30 and the metering pipe 50 in a flow direction 210 from the existing pipework 30 through the metering pipe 50 and further on into the second part of the existing pipework 30. The metering pipe is defined with a pipe cross section 56, a pipe length 58, a pipe cross section periphery 62 and an inner surface 60. The metering pipes inner surface 60 is preferably flush or substantially flush in the flow direction 210. The volumetric flow measurement 200 is achieved by applying a magnetic field 220 with a magnetic direction 230 across a cross section 56 of the metering pipe 50 in which the measurements 200 may be performed. The metering pipe 50 comprises multiple electrodes 80 configured to constitute part of the metering piper and are distributed along the metering pipe cross section periphery 62. The electrodes may be galvanic electrodes that are part of the inner surface 60 and preferably in a flush manner. The electrodes may be capacitive electrodes that that are not part of the inner surface 60, but located outside the inner surface 60. The magnetic field 220 is arranged to in such a way that the electrodes 80 are within the magnetic field 220 when provided. A plane for the magnetic field 220 is illustrated with a magnetic direction 230. The plane intersects with the cross section 56 of the metering piper along which periphery the electrodes are distributed and across which an electrode pair direction 240 is illustrated. With an electrically conductive fluid 20 flowing through the metering pipe 50 and the magnetic field 220 is applied an induced voltage 250 may be measured across the electrodes.

Figure 2A illustrates prior art embodiment of a magnetic-inductive flow meter. A magnetic field 220 is applied across the metering pipe 50 with a magnetic direction 230. Two electrodes are placed along the metering pipe cross section periphery 62 and midway between top and bottom of the metering pipe intersecting the plane of the magnetic field. When an electrically conductive fluid 20 flows between the electrodes 80 a voltage 250 is induced across the electrodes 80.

Figure 2B illustrates embodiments of the electromagnetic flow meter 10. A first magnetic field 222 and a second magnetic field 224 is applied across the metering pipe 50 with a first magnetic direction 232 and a second magnetic direction 234 substantially perpendicular to each other. Four electrodes 80 are placed along the metering pipe cross section periphery 62 and distributed evenly along the periphery 62 intersecting the planes of the magnetic fields. The electrode pair directions 240 for electrode pairs comprising electrodes opposite each other are parallel to the magnetic field directions 230. For one embodiment the measurements are performed by applying a first magnetic field 222 while measuring the induced 250 voltage across the electrode pair 82 comprising the first 84 and third 86 electrode. Consecutive the second magnetic field 224 is applied and the induced voltage 250 across the electrode pair 82 comprising the second 85 and fourth 87 electrode is measured. The two measurements may then be evaluated to return the volumetric flow measurement 200.

For a second embodiment illustrated by the two drawings on the right of figure 2B the measurements are performed by again applying a first magnetic field 222 while measuring the induced 250 voltage and consecutively allying a second magnetic field 224 while measuring the induced voltage 250. For this embodiment the magnetic fields are shifted 45 degrees along the pipe periphery compared to the electrode pair directions mentioned in the above embodiment. For each magnetic field two measurements can be performed simultaneously at two different parts of the metering pipe. For the first magnetic field 222 the voltage induced 250 across the first 84 and fourth electrode 87 are measured simultaneously with the voltage induced 250 across the second 85 and third electrode 86 is measured. For the second magnetic field 224 the voltage induced 250 across the first 84 and second electrode 85 are measured simultaneously with the voltage induced 250 across the third 86 and fourth electrode 87 is measured. This embodiment results in four measurements at four different parts of the pipe cross section 56 in the same time as performing two measurements in the above embodiment illustrated at the left figure 2B. The four measurements may then be evaluated to return the volumetric flow measurement 200.

Figure 3 illustrates embodiments of the present flowmeter constructed with three, four and six electrodes 80 equally distributed along the periphery 62 of the cross section of the metering pipe. The combination of electrode pairs 82 is illustrated by dotted lines.

The embodiment with three electrodes may give measurements at three different parts of the pipe cross section 56. The embodiment with four electrodes may give measurements at six different parts of the pipe cross section 56. And an embodiment with six electrodes may give up to measurements at fifteen different parts of the pipe cross section 56. The number of possible measurements also depends on the number and direction 230 of applied magnetic fields. Using four or more electrodes provides for the multiple measurements for each magnetic field 220 applied.

Figure 4A illustrates embodiments configured with magnetic means comprised of permanent magnets in 4A. Rotating the permanent magnets along the pipe periphery 62 shifts the magnetic direction 230. Here is illustrated a shift in magnetic direction of 90 degrees. The magnetic field can be shifted with the intervals relevant for the specific embodiment. The more electrodes distributed along the periphery the more measurements at more part of the cross section 56 may be performed. Equally the more and smaller steps with which the magnetic field directions is changed the more measurements at more part of the cross section 56 may be performed. This may give a higher accuracy but the time span for changing magnetic field direction should be considered according to possible shift in flow profile, velocity or shifts in other fluid parameters influencing the volumetric flow.

Figure 4B illustrates embodiments configured with magnetic means 70 comprised of electromagnetic coils 100. Using electromagnetic coils distributed along the outer periphery 62 and in the plane of the cross section of the metering pipe 50 the magnetic direction 230 of the applied magnetic field 220 may be changed in direction and strength dependent on the applied current to each of the electromagnetic coils. Six different magnetic field directions are illustrated in figure 4B. The two magnetic directions illustrated to the left may be achieved by applied electrical current to the horizontal electromagnetic coils. Changing the direction of the applied electrical current changes the magnetic field direction 180 degree. The two magnetic directions illustrated in the middle may be achieved by applied electrical current to the vertical electromagnetic coils. Again by changing the direction of the applied electrical current changes the magnetic field direction 180 degree. To the right two magnetic directions 230 are illustrated shifted 45 degree to either side of a vertical line. These magnetic directions 230 are achieved by applying an electrical current to both the vertical electromagnetic coils 100 and the horizontal electromagnetic coils 100 which results in magnetic fields 220 equal in strength. The embodiment illustrated in figure 4B is not limited to these six magnetic field directions. By varying the applied electrical currents to the vertical and horizontal electromagnetic coils the magnetic direction may be shifted by small intervals.

Figure 5 illustrates a switch arrangement 110 that allows for switching between multiple combinations of magnetic directions 230 and electrode pair directions 240 and a logic controller 120 configured for controlling the switch arrangement 110. The electrodes 80 and electromagnetic coils 100 are connected to the switch arrangement110. The logic controller 120 is connected to communicate with data storage means 130 or other means for usable for processing the measured values by computing, calculating, estimating, comparing or in other ways processing the measured values.

The embodiment illustrated in figure 5 comprises four electrodes and four magnetic means but is not limited to this number and may comprise any of the other described combinations of electrodes and magnetic means. Furthermore, the connections are illustrated by fully connected lines coupling the parts. The connections comprises a variety of different communication lines, which may be coupled by electrical wire, capacitive coupled, optical fibre coupled, wireless coupled but not limited to this.

The magnetic means illustrated in figure 5 may be fixed in position, fixed in strength, adjustable in position, adjustable in strength or any combination of these.

Figure 6 illustrates a method 300 of performing a volumetric flow measurement 200 of electrically conductive fluids comprising acts of providing 310 a magnetic field, measuring 320 voltage and to estimate 330 the volumetric flow. The measured voltages are compared 340 in accordance with the provided magnetic fields to control the measurement for inconsistencies, detect faults (350) and to detect variations in flow profiles (42) across the metering pipe cross section (56).

The number of measurements for each provided magnetic field may vary according to the number of electrodes and magnetic means of the embodiment on which the method is applied. Furthermore, the number of single acts comprised in the method may depend on the processing method applied in the method or it may depend on the required accuracy and speed of the measurements performed.

Figure 7 illustrates an exemplary embodiment a flowmeter 10 inserted into existing pipework 30 between a first end of the existing pipework and a second end of the existing pipework. The metering pipe 50 and the existing pipework comprises ferrules 92 for coupling the parts. A gasket 90 is provided in between the ferrules for sealing and the ferrules are clamped together using clamps 94. A wide variety of industrial standards exists for ferrules, gaskets and clamps, and may be chosen accordingly to the use. This illustrates one simple fashion of mounting or connecting the meter to a pipework. A person skilled in the art may choose a variety of connecting principles including integrating the flow meter into a pipe.

## Claims

1. An electromagnetic flow meter (10) for performing a volumetric flow measurement (200) of electrically conductive fluids (20) flowing in an existing pipework (30), the flow meter (10) configured to be inserted in the existing pipework (30) and for guiding a fluid (40) in a flow direction (210) from an inlet (52) to an outlet (54) in a metering pipe (50) with a pipe cross-section (56) and a pipe length (58) in the flow direction (210) and an inner surface (60) that is substantially flush in the flow direction (210) and **characterized by having** magnetic means (70) arranged to provide a magnetic field (220) in a cross section (56) of the metering pipe (50) in multiple magnetic directions (230) and with multiple electrodes (80) configured to constitute part of the metering pipe (50) and arranged within the magnetic field (220) when provided and arranged with means to measure a voltage across a pair (82) amongst the multiple electrodes (80) having multiple electrode pair directions (240) and that the flow meter (10) is configured to estimate the volumetric flow of electrically conductive fluids (20) as a function of at least two different combinations of magnetic directions (230) and electrode pair directions (240), where at least one of the magnetic direction (230) or electrode pair directions (240) are different.

2. The electromagnetic flow meter (10) according to claim 1 **characterised in that** a first magnetic means (72) with a first magnetic direction (232) and a second magnetic means (74) with a second magnetic direction (234) are arranged with the first (232) and second magnetic directions (234) substantially perpendicular to each other.

3. The electromagnetic flow meter (10) according to claim 1 or 2 **characterised in that** a first (84), a second (85), a third (86) and a fourth (87) electrode are equally distributed along the periphery (62) of the cross section of the pipe and configured to form at least two distinctive pairs of electrodes (82) with a first electrode pair direction (242) and a second electrode pair direction (244) that are different.

4. The electromagnetic flow meter (10) according to any preceding claim **characterised in that** the first (72) and second magnetic means (74) are electromagnetic coils (100) each configured to generate magnetic field (220) independent of each other.

5. The electromagnetic flow meter (10) according to any preceding claim **characterised in** further comprising a switch arrangement (110) that allows for switching between multiple combinations of magnetic directions (230) and electrode pair directions (240) and a logic controller (120) configured to control the switch arrangement (110).

6. A method (300) of performing a volumetric flow measurement (200) of electrically conductive fluids (20) flowing in a pipe (50) through a pipe cross section (56) in a flow direction (210), the method comprising actions of:
- Providing (310) at least one magnetic field (220) in a cross section of the pipe (56) in a magnetic direction (230)
- Measuring (320) at least one voltage across a pair of electrodes (82) having an electrode pair direction (240)
to obtain at least three different directions of magnetic direction (230) and electrode pair direction (240) and
- Estimating (330) the volumetric flow of electrically conductive fluids (20) as a function of at least two different combinations of magnetic directions (230) and electrode pair directions (240).

7. The method (300) of performing a volumetric flow measurement (200) according to claim 6, wherein the action of providing at least one magnetic field (220) comprise actions of using:
a first magnetic means (72) with a first magnetic direction (232) and a second magnetic means (74) with a second magnetic direction (234) are arranged with first (232) and second magnetic directions (234) substantially perpendicular to each other.

8. The method (300) of performing a volumetric flow measurement (200) according to claim 6 or 7, wherein the action of measuring at least one voltage across a pair of electrodes (82) comprise actions of using:
a first (84), a second (85), a third (86) and a fourth (87) electrode equally distributed along the periphery (62) of the cross section of the pipe (50) and configured to form at least two distinctive pairs (82) of electrodes with a first electrode pair direction (242) and a second electrode pair direction (244) that are different.

9. A method (300) of performing a volumetric flow measurement (200) according to any of claim 6 to 8 wherein the action of measuring at least one voltage across a pair of electrodes (82) comprise actions of using at least two distinctive pairs (82) of electrodes with a first electrode pair direction (242) and a second electrode pair direction (244) that are different to obtain at least one virtual electrode pair (360).

10. A method (300) of performing a volumetric flow measurement (200) and detecting an asymmetric flow profile (44) in the metering pipe (50), the method comprising actions from any of claims 6 to 9, and further action of
- Comparing (340) at least two different combinations of magnetic directions (230) and electrode pair directions (240) to detect variations in flow profiles (42) across the metering pipe cross section (56).

11. A method (300) of performing a volumetric flow measurement (200) and detecting a system fault, the method comprising actions from any of claims 6 to 10, and further action of
- Comparing (340) all different combinations of magnetic directions (230) and electrode pair directions (240) to detect variations in flow profiles (42) across the pipe cross section (56) and to detect faults (350) as large or singular deviations in one or more voltages (250) across a pair of electrodes (82) having an electrode pair direction (240).
